# EUROPEAN PATENT SPECIFICATION

(11) **EP 2 379 195 B1**
(45) Date of publication and mention of the grant of the patent: **03.09.2014**
(21) Application number: 09833719.9
(22) Date of filing: 09.12.2009
(51) Int. Cl.: B01D 33/067, B01D 33/06, D21C 9/06, D21C 9/18

(54) **METHOD AND ARRANGEMENT FOR FIXING AN ENDLESS WIRE**
VERFAHREN UND ANORDNUNG ZUR FIXIERUNG EINES ENDLOSDRAHTES
PROCÉDÉ ET AGENCEMENT POUR FIXER UN FIL SANS FIN

(30) Priority: 19.12.2008 SE 0802633
(43) Date of publication of application: 26.10.2011
(73) Proprietor: Valmet Technologies, Inc., 02150 Espoo (FI)
(72) Inventor: LINDKVIST, David, S-865 32 Alnö (SE)
(74) Representative: Saitton, Hanna Johanna
(86) International application number: PCT/SE2009/051394
(87) International publication number: WO 2010/071555

(56) References cited:
- WO-A1-00/64559
- WO-A1-97/35656
- SE-C2- 523 415
- US-A- 4 401 564
- US-A- 5 084 174

## Description

### TECHNICAL FIELD

The invention generally relates to endless wires and specifically to a method and an arrangement for fixing an endless wire around a drum with a perforated outer surface.

### BACKGROUND

In some applications in the pulp industry endless wires are attached round a cylindrical perforated drum. One such application is filtering drums, wherein filtrate from a washing or dewatering process is filtered in order to extract useful cellulose fibres from the filtrate. The wording "endless wire" implies that it has no end in the circumferential direction; however, in the axial direction the wire has two (axial) edges.

In the use of filtering drums the liquid to be filtered, e.g. wash liquid, is filtered through the endless wire and through the perforated outer surface of the drum, such that the fibres in the liquid are extracted and stays on the surface of the endless wire, wherein the resulting filtrate is drained into a hollow part of the drum and is subsequently discarded as waste water or passed onto a subsequent processing step.

The fibres obtained in the filtering stage may be re-entered into further processing steps of the pulp process.

In use, the endless wire is exposed to various forces acting in various directions of the wire. These forces tend to move the wire out of position, and therefore, in order to prevent such movements the wire needs to be fixed to the drum. It is favourable that an arrangement for fixing the wire includes a fixing means for fixing the edge portions of the endless wire.

### PRIOR ART

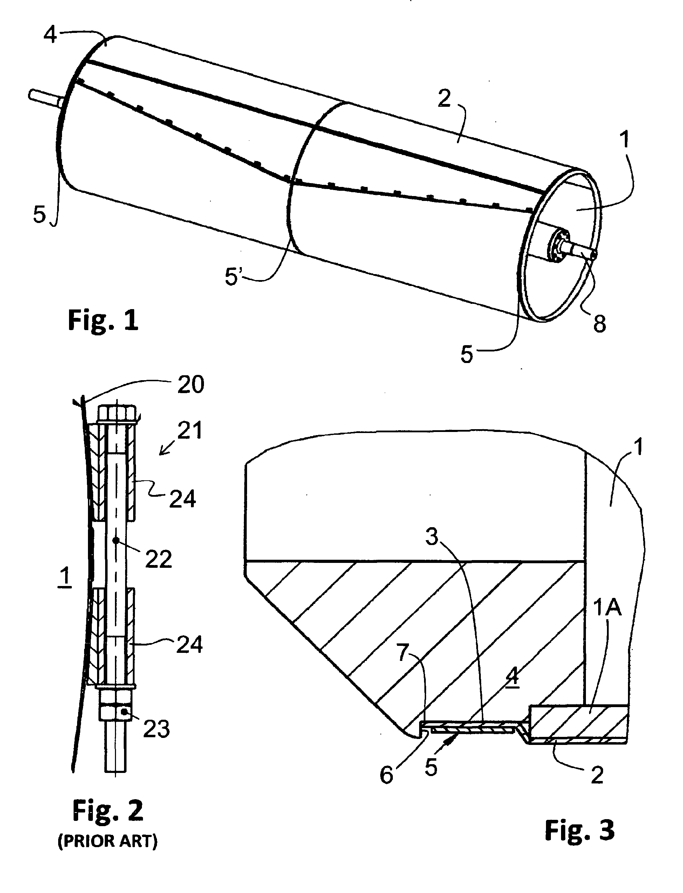

In fig. 2, a conventional arrangement for fixing the edge portions of an endless wire to the edge section of a cylindrical drum 1 is shown. The endless wire has been shrunk to fit the drum 1. A metal strip 20 is arranged around the endless wire and the drum 1 by means of a fastening arrangement in form of a screw joint reinforcement 21 including a screw 22 and two bolts 23. Two holding parts 24 of the fastening arrangement are welded on to each end of the metal strip 20, such that the metal strip 20 may be tightened around the endless wire and the drum by actuation of the screw 22 and the bolts 23. This is, however, a rather complicated and expensive arrangement. Also, the edges of the metal strip may damage the endless wire , such that it will have to be replaced and prematurely discarded. Another problem is that the screw joint is rather bulky and precaution has to be taken not to disturb its passage during rotation of the drum.

Another way of fastening an endless wire is presented in EP 0 341 913 B1, in which the endless wire is provided with guide belts, which are fastened to the edge portions of the wire. Thus, the guide belts function as guides, guiding the wire along its path. This is a functional solution for wires that pass between several drums. However, it is expensive and would be complicated to implement on a single drum, since at least one of the guide belts would have to be fastened to the wire when the wire has already been placed around the drum.

Hence, there is a need for a fastening arrangement for fastening an endless wire to a single drum, which arrangement is easy to implement and not too expensive to produce.

### SUMMARY OF THE INVENTION

The object of the invention is to provide a novel, functional and easily implemented method and arrangement for fixing an endless wire to a drum. According to a first aspect, the invention relates to a method of fixing an endless wire to a cylindrical drum, the method including the steps of:
- providing a wire of a shrinkable material, which wire has a length that corresponds to, or is slightly longer than, the circumference of a cylindrical drum;
- applying said wire around the cylindrical drum, such that it forms an endless wire around the whole circumference of the cylindrical drum, and such that the edge portions of the thus formed endless wire are located near the edge sections of the cylindrical drum;
- shrinking the wire on location around the cylindrical drum, such that it obtains a length that makes it fit tightly around said drum. Further the method includes the steps of:
- providing at least two strips of a shrinkable material, both strips having a length that corresponds to, or is slightly longer than, the circumference of the cylindrical drum;
- applying said strips around the edge portions of the endless wire arranged on the cylindrical drum, such that they form endless strips for holding the edge portions of the endless wire fixed around the whole circumference of the cylindrical drum;
- shrinking the strips on location around the endless wire arranged on the cylindrical drum, such that they obtain a length that make them fit tightly around said drum and such that they assist in keeping the edge sections of the endless wire fixed.

According to a second aspect the invention relates to an arrangement for fixing an endless wire to a cylindrical drum, which arrangement includes:
- a cylindrical drum;
- a wire of a shrinkable material, said wire having been shrunk around the cylindrical drum to form an endless wire around the whole circumference of the cylindrical drum, the edge portions of the endless wire being located near the edge sections of the cylindrical drum;
- the shrunk endless wire having a length that makes it fit tightly around said drum. Further, the arrangement includes:
- at least two strips of a shrinkable material, said strips having been shrunk around the edge sections of the endless wire arranged on the cylindrical drum, such that they form endless strips for holding the edge sections of the endless wire fixed around the whole circumference of the cylindrical drum; - the shrunk strips having a length that make them fit tightly around said drum and such that they assist in keeping the edge sections of the endless wire fixed.

The invention provides a method and an arrangement for fixing an endless wire to a cylindrical drum that is easy to implement and execute, and that is both cost efficient and reliable. Regarding all these aspects the invention provides advantages with respect to the prior art.

Advantageous embodiments of the invention will become apparent from the dependent claims and from the detailed description of the invention.

### SHORT DESCRIPTION OF THE DRAWINGS

Below, the invention will be described in detail with reference to the accompanying drawings, of which:
- Fig. 1: shows a drum on which an endless wire is arranged;
- Fig. 2: shows a conventional method of fastening an endless wire to a drum; and
- Fig. 3: shows a longitudinal section of an edge section of a drum, where an endless strip is arranged around the edge portion of the endless wire on said drum.

### DETAILED DESCRIPTION OF THE INVENTION

Figure 1 shows a cylindrical drum 1, around which an endless wire 2 is arranged. The endless wire is produced from a wire of a shrinkable material, which has been shrunk around the cylindrical drum 1, such that it forms an endless wire around the whole circumference of the cylindrical drum. The length of the endless wire 2 is such that when it has been shrunk it fits tightly around the drum 1, and the width of it is such that its edge portions 3 are located at an edge section 4 of the cylindrical drum 1. Normally, the width of the wire 2, i.e. its extension along the axial direction of the drum, is over dimensioned such that parts of the wire will extend outside the axial length of the drum 1. The superfluous material of the wire 2 is normally removed, e.g. by cutting. The cutting is however preferably performed after that edge portions 3 of the wire 2 has been fixed.

A main portion of the outer surface of the cylindrical drum 1 is perforated and the wire is arranged such that it covers at least this perforated portion of the drum. During filtration, the liquid to be filtered passes through the endless wire 2 and through the perforations of the drum 1. The inside of the drum involves ducts for leading away the filtrate to disposal or to further processes. The filtride, i.e. the solid portions that are obtained from the filtration, adheres to the outer surface of the wire 2 and may be gathered, e.g. by means of a water jet, a doctor blade or the like. When a doctor blade is used, precaution has to be taken in order not to damage the wire 2.

As indicated in the background portion of the description the endless wire 2 needs to be tightly fastened to the drum 1 in order for the filtering process to work properly and be fully efficient.

In fig. 3, a longitudinal section of the lower left edge section 4 of a drum 1 is shown, wherein an endless strip 5 is arranged around the edge portion 3 of the endless wire 2 on said drum 1. The outer surface 1A of the drum 1 is perforated (not shown) in order to let filtrate pass through the wire 2 and said outer surface 1A into a hollow part of the drum 1. The perforated outer surface 1A covers substantially the whole circumferential length of the drum 1 between the respective edge sections 4 of the drum 1.

The edge section 4 of the shown embodiment is formed as an individual part of the cylindrical drum 1 and includes a circumferential recess 6 of a width that corresponds to the width of an endless strip 5. The edge portions 3 of the endless wire 2, as well as the endless strips 5 are at least partly shrunk into said recesses 6, in order to fix the edge sections 4 of the endless wire 2. The rims 7 of the endless wire 2 may extend outside the respective recesses 6. Also, each rim 7 may involve a bulge in the form of a seam or the like, which bulge is prevented from slipping under the strips 5 due to its own thickness. Normally this is however not needed since the friction between the wire 2 and the strip 5 is sufficient from keeping them from moving with respect to each other.

The thickness of the endless strips 5 is preferably greater than the thickness of the endless wire 2, even though they may be made from the same fabric. For instance, the endless wire 2 may consist of a single fabric layer, whereas the endless strips 5 may consist of multiple fabric layers, preferably a double fabric layer.

In this arrangement at least two strips 5 of a shrinkable material, similar to the material of the endless wire 2 itself, have been shrunk around the edge portions 3 of the endless wire 2, once the wire has already been arranged on the cylindrical drum 1, such that they form endless strips 5 for holding the edge portions 3 of the endless wire 2 fixed to the respective edge sections 4 the cylindrical drum 1. If a very wide drum 1 is to be covered by a single endless wire 2, it may be advantageous to use more than two strips 5 for fastening it to the drum, for example a strip 5' may be used to fix the centre of the endless wire 2.

The shrunk strips 5 have a length that make them fit tightly around said drum and that assist in keeping the edge portions 3 of the endless wire 2 fixed. Preferably, the strips 5 are prefabricated in the desired lengths, but they may also be cut into usable lengths at location. An advantage with strips 5 that have been prefabricated into usable lengths is that they may be provided with seams for facilitating the connection of the circumferential ends thereof to each other.

The method of fixing the endless wire is done in steps. Firstly a wire of a shrinkable material has to be provided. The wire should have a length that corresponds to, or is slightly longer than, the circumference of a cylindrical drum. The wire should then be applied around the cylindrical drum 1, such that it forms an endless wire 2 around the whole circumference of the cylindrical drum, and such that the edge portions 3 of the thus formed endless wire 2 are located near the edge sections 4 of the cylindrical drum 1.

Thereafter, the wire is shrunk on location around the cylindrical drum, such that it obtains a length that makes it fit tightly around said drum. In order to fix the endless wire 2 sufficiently, at least two strips 5 of a shrinkable material, possibly the same material as that of the endless wire 2, are provided. Both these strips 5 should have a length that corresponds to or is slightly longer than the circumference of the cylindrical drum 1. The strips are then applied around the edge sections of the endless wire 2, already arranged on the cylindrical drum 1, such that they form endless strips 5 for holding the edge portions 3 of the endless wire 2 fixed around the whole circumference of the cylindrical drum 1.

The strips 5 are then shrunk on location around the endless wire 2 and the cylindrical drum 1, such that they obtain a length that make them fit tightly around said drum and that assist in keeping the edge portions 3 of the endless wire 2 fixed to it.

Preferably, when the wire is applied around the cylindrical drum 1 the circumferential edge portions 3 of the wire are sewn together, in order to form the endless wire 2. The strips 5 may be applied in the same manner, i.e. by sewing the short ends of the strips together. Preferably these steps are performed on location around the drum 1, since it may not be feasible to apply the wire 2 nor the strips 5 once their ends are sewn together, and since the axial ends 8 of the drum 1 are carried in bearings (not shown).

The shrinking of the endless wire 2 and the endless strips 5 are preferably performed by applying hot water to the shrinkable material. Possibly it may be done in steps, where a portion of the drum, typically a sixth of the drum, is located in a bath of hot water long enough to shrink the wetted portion of the wire/strips. Another way of performing the shrinking is by adding steam to the fabric. This may be advantageous, at least for shrinking the strips 5, since these have a limited extension in the axial direction, such that the whole width of the strips 5 may be simultaneously processed by a single steaming apparatus.

Preferably, the endless wire 2 is shrunk in a first step and the endless strips 5 are shrunk in a second step.

Above, the invention has been described with reference to specific embodiments; however, the invention is not limited to any of these specific embodiments. Instead, the invention is only limited by the scope of the following claims.

## Claims

1. Method of fixing an endless wire (2) to a cylindrical drum (1), the method including the steps of:
- providing a wire of a shrinkable material, which wire has a length that corresponds to, or is slightly longer than, the circumference of the cylindrical drum (1);
- applying said wire around the cylindrical drum (1), such that it forms an endless wire (2) around the whole circumference of the cylindrical drum (1), and such that the edge portions (3) of the thus formed endless wire (2) are located near the edge sections (4) of the cylindrical drum (1);
- shrinking the endless wire (2) around the cylindrical drum (1), such that it obtains a length that makes it fit tightly around said drum (1); the method being **characterised by** the further steps of:
- providing at least two strips of a shrinkable material, each strip having a length that corresponds to, or is slightly longer than, the circumference of the cylindrical drum (1);
- applying said strips around the edge portions (3) of the endless wire (2) arranged on the cylindrical drum (1), such that they form endless strips (5) for holding the edge portions (3) of the endless wire (2) fixed around the whole circumference of the cylindrical drum (1);
- shrinking the strips (5) on location around the endless wire (2) arranged on the cylindrical drum (1), such that they fit tightly around said drum (1) and such that they assist in keeping the edge portions (3) of the endless wire (2) fixed thereto.

2. Method according to claim 1, wherein the step of applying the wire around the cylindrical drum (1) includes sewing circumferential edge portions of the wire together, to form the endless wire (2) around the cylindrical drum (1).

3. Method according to claim 1 or 2, wherein the step of applying the strips around the cylindrical drum includes sewing opposed circumferential edge portions of each strip together, such that two individual endless strips (5) are formed.

4. Method according to any of the preceding claims, wherein the steps of shrinking the endless wire (2) and the endless strip (5) are performed by applying hot water or steam to the respective shrinkable material.

5. Method according to claim 4, wherein the shrinking is performed in at least separate two steps, a first step where only the endless wire (2) is shrunk around the drum (19, and a second subsequent step where the endless strips (5) are shrunk around the wire (2).

6. Method according to any of the preceding claims, wherein a third strip (5) is applied and shrunk around a central portion of the endless wire (2).

7. An arrangement including:
- a cylindrical drum (1) with a perforated outer surface (1A);
- an endless wire (2) of a shrinkable material, said wire having been shrunk around the cylindrical drum (1) such that it forms an endless wire (2) around the whole circumference of the cylindrical drum (1), the edge portions (3) of the endless wire being located near the edge sections (4) of the cylindrical drum (1);
- the shrunk endless wire (2) having a length that makes it fit tightly around said drum (1); the arrangement being **characterised in that** it further includes:
- at least two endless strips (5) of a shrinkable material, which endless strips (5) have been shrunk around the edge portions (3) of the endless wire (2) arranged on the cylindrical drum (1), such that they form endless strips (5) for holding the edge portions (3) of the endless wire (2) fixed around the whole circumference of the cylindrical drum (1);
- the shrunk strips (5) having a length that make them fit tightly around said drum and such that they keep the edge portions (3) of the endless wire (2) fixed.

8. The arrangement according to claim 7, wherein the respective edge sections (4) of the cylindrical drum (1) includes a recess (6) of a width that corresponds to the width of the endless strip (5), and wherein the respective edge portions (3) of the endless wire (2) as well as the respective endless strips (5) are at least partly shrunk into said recesses (6), in order to fix the edge portions (3) of the endless wire (2) in said recess.

9. The arrangement according to claim 7 or 8, wherein the thickness of the endless strips (5) is greater than the thickness of the endless wire (2).

10. The arrangement according to claim 9, wherein the endless strips (5) comprise multiple layers of fabric, preferably a double fabric layer.

11. The arrangement according to any of the claims 7-10, wherein the longitudinal ends of the endless strips (5) include a prearranged seam for joining the longitudinal ends to each other.

## Patentansprüche

1. Verfahren zum Fixieren eines endlosen Bandes (2) auf einer zylindrischen Trommel (1) umfassend die folgenden Schritte:
- Zur Verfügung stellen eines Bands aus schrumpfbarem Material, das eine Länge hat, die dem Umfang der zylindrischen Trommel (1) entspricht oder etwas länger ist als diese Länge;
- Wickeln dieses Bands um die zylindrische Trommel (1), sodass sie ein endloses Band (2) um den gesamten Umfang der zylindrischen Trommel (1) bildet, und so, dass sich die Kantenbereiche (3) des so gebildeten endlosen Bands (2) nahe den Kantenbereichen (4) der zylindrischen Trommel (1) befinden;
- Schrumpfen des endlosen Bands (2) um die zylindrische Trommel (1), sodass es eine Länge erhält, durch die es dicht um die Trommel (1) herum sitzt; das Verfahren ist durch die weiteren Schritte gekennzeichnet:
- Vorsehen von zumindest zwei Streifen eines schrumfbaren Materials, jeder Streifen weist eine Länge auf, die dem Umfang der zylindrischen Trommel (1) entspricht oder etwas länger ist als diese Länge;
- Aufbringen diese Streifen um die Kantenbereiche (3) des endlosen Bands (2), das auf der zylindrischen Trommel (1) vorgesehen ist, sodass sie endlose Streifen (5) ausbilden, um die Kantenbereiche (3) des endlosen Bands (2) entlang des gesamten Umfangs um die zylindrische Trommel (1) zu fixieren;
- Schrumpfen der Streifen (5) an Ort und Stelle, um das endlose Band (2), das auf der zylindrischen Trommel (1) angeordnet ist, herum, sodass sie dicht um die Trommel (1) herum sitzen und so, dass sie dabei assistieren, die Kantenbereiche (3) des endlosen Bands (2) darauf zu fixieren.

2. Verfahren nach Anspruch 1, worin der Schritt des Aufbringens des Bandes um die zylindrische Trommel (1) das Zusammennähen von Kanten in Umfangsrichtung umfasst, um das endlose Band um die zylindrische Trommel (1) herum zu schaffen.

3. Verfahren nach Anspruch 1 oder 2, wobei der Schritt des Aufbringens der Streifen um die zylindrische Trommel herum das Vernähen einander gegenüberstehender Kantenbereiche in Umfangsrichtung jedes Streifens miteinander umfasst, sodass zwei individuelle, endlose Streifen (5) gebildet werden.

4. Verfahren nach einem der voranstehenden Ansprüche, worin die Schritte des Schrumpfens des endlosen Bandes (2) und der endlosen Streifen (5) durch Anwenden heißen Wassers oder von Dampf auf das jeweilige schrumpfbare Material erfolgt.

5. Verfahren nach Anspruch 4 wobei das Schrumpfen in zumindest zwei von einander getrennten Schritten erfolgt, ein erster Schritt, wenn nur das endlose Band (2) um die Trommel (1) geschrumpft wird, und ein zweiter, nachfolgender Schritt, wenn die endlosen Streifen (5) um das Band (2) geschrumpft werden.

6. Verfahren nach einem der voranstehenden Ansprüche, wobei ein dritter Streifen (5) auf einen zentralen Teil des endlosen Bandes (2) aufgebracht und geschrumpft wird.

7. Eine Anordnung, umfassend:
- eine zylindrische Trommel (1) mit einer perforierten äußeren Oberfläche (1A);
- ein endloses Band (2) eines schrumpfbarem Materials, welches Band um die zylindrische Trommel (1) herum geschrumpft wurde, sodass sie ein endloses Band (2) um den gesamten Umfang der zylindrischen Trommel (1) herum ausbildet, wobei die KantenBereiche (3) des endlosen Bandes nahe den Kantenbereichen (4) der zylindrischen Trommel (1) angeordnet sind;
- das geschrumpfte, endlose Band (2) weist eine Länge auf, durch die es dicht um die Trommel (1) herum sitzt, die Anordnung ist **dadurch gekennzeichnet** das sie weiters aufweist:
- zumindest zwei endlose Streifen (5) eines schrumpfbarem Materials, welche endlosen Streifen (5) über die Kantenbereiche (3) des endlosen Bandes (2), das auf der zylindrischen Trommel (1) angeordnet ist, herum geschrumpft wurden, sodass sie endlose Streifen (5) ausbilden, die die Kantenbereiche (3) des endlosen Bandes um den gesamten Umfang der zylindrischen Trommel (1) herum fixieren;
- die geschrumpften Streifen (5) weisen eine Länge auf durch die sie fest um die Trommel herum sitzen und so, dass sie die Kantenbereiche (3) des endlosen Bandes (2) fixieren.

8. Anordnung nach Anspruch 7, wobei die entsprechenden Kantenbereiche (4) der zylindrischen Trommel (1) einer Vertiefung (6) versehen sind, die eine Weite aufweist, die der Weite des endlosen Streifens (5) entspricht und wobei die entsprechenden Kantenbereiche (3) des endlosen Bandes (2), ebenso wie die entsprechenden endlosen Streifen (5), zumindest teilweise in diese Vertiefung (6) geschrumpft sind, um die Kantenbereiche des endlosen Bandes (2) in dieser Vertiefung zu fixieren.

9. Anordnung nach Anspruch 7 oder 8, wobei die Dicke der endlosen Streifen (5) größer ist als die Dicke des endlosen Bandes (2).

10. Anordnung nach Anspruch 9, wobei die endlosen Streifen (5) mehrfache Lagen von Gewebe, bevorzugt eine doppelte Gewebelage, aufweisen.

11. Anordnung nach einem der Ansprüche 7-10, worin die Längsenden der endlosen Streifen (5) einen vorgesehenen Saum zum Verbinden der Längsenden miteinander aufweisen.

## Revendications

1. Procédé de fixation d'une garniture sans fin (2) en fil métallique à un tambour cylindrique (1), le procédé comprenant les étapes consistant à :
- se pourvoir d'une garniture en fil métallique, en matériau rétractable, laquelle garniture a une longueur qui correspond à la circonférence du tambour cylindrique (1) ou qui est légèrement supérieure à celle-ci ;
- appliquer ladite garniture autour du tambour cylindrique (1) de manière qu'elle forme une garniture sans fin (2) sur toute la circonférence du tambour cylindrique (1), et de manière que les parties de bord (3) de la garniture sans fin (2) ainsi formée soient situées à proximité des sections de bord (4) du tambour cylindrique (1) ;
- rétracter la garniture sans fin (2) autour du tambour cylindrique (1) de manière qu'elle prenne une longueur la faisant s'ajuster étroitement autour dudit tambour (1) ; le procédé étant **caractérisé par** les étapes supplémentaires consistant à :
- se pourvoir d'au moins deux bandes de matière rétractable, chaque bande ayant une longueur qui correspond à la circonférence du tambour cylindrique (1) ou qui est légèrement supérieure à celle-ci ;
- appliquer lesdites bandes autour des parties de bord (3) de la garniture sans fin (2) disposée sur le tambour cylindrique (1) de manière qu'elles forment des bandes sans fin (5) destinées à maintenir les parties de bord (3) de la garniture sans fin (2) fixées sur toute la circonférence du tambour cylindrique (1) ;
- rétracter les bandes (5) en place autour de la garniture sans fin (2) disposée sur le tambour cylindrique (1) de manière qu'elles soient étroitement ajustées autour dudit tambour (1) et qu'elles participent au maintien des parties de bord (3) de la garniture sans fin (2) fixées à celui-ci.

2. Procédé selon la revendication 1, dans lequel l'étape consistant à appliquer la garniture autour du tambour cylindrique (1) inclut l'opération consistant à coudre ensemble des parties de bord circonférentielles de la garniture pour former la garniture sans fin (2) autour du tambour cylindrique (1).

3. Procédé selon la revendication 1 ou 2, dans lequel l'étape consistant à appliquer les bandes autour du tambour cylindrique inclut l'opération consistant à coudre ensemble des parties de bord circonférentielles opposées de chaque bande de manière à former deux bandes sans fin (5) individuelles.

4. Procédé selon l'une quelconque des revendications précédentes, dans lequel les étapes consistant à rétracter la garniture sans fin (2) et la bande sans fin (5) sont réalisées par application de vapeur ou d'eau chaude sur la matière rétractable respective.

5. Procédé selon la revendication 4, dans lequel la rétraction est réalisée en au moins deux étapes distinctes, une première étape dans laquelle seule la garniture sans fin (2) est rétractée autour du tambour (19) et une seconde étape subséquente dans laquelle les bandes sans fin (5) sont rétractées autour de la garniture (2).

6. Procédé selon l'une quelconque des revendications précédentes, dans lequel une troisième bande (5) est appliquée et rétractée autour d'une partie centrale de la garniture sans fin (2).

7. Agencement incluant :
- un tambour cylindrique (1) présentant une surface extérieure perforée (1A) ;
- une garniture sans fin (2) en fil métallique en matière rétractable, ladite garniture ayant été rétractée autour du tambour cylindrique (1) de manière à former une garniture sans fin (2) sur toute la circonférence du tambour cylindrique (1), les parties de bord (3) de la garniture sans fin étant situées à proximité des sections de bord (4) du tambour cylindrique (1) ;
- la garniture sans fin (2) rétractée ayant une longueur telle qu'elle est étroitement ajustée autour dudit tambour (1) ; l'agencement étant **caractérisé en ce qu'**il inclut en outre :
- au moins deux bandes sans fin (5) en matière rétractable, lesquelles bandes sans fin (5} ont été rétractées autour des parties de bord (3) de la garniture sans fin (2) disposée sur le tambour cylindrique (1) de manière à former des bandes sans fin (5) destinées à maintenir les parties de bord (3) de la garniture sans fin (2) fixées sur toute la circonférence du tambour cylindrique (1) ;
- les bandes rétractées (5) ayant une longueur telle qu'elles sont étroitement ajustées autour dudit tambour et de manière qu'elles maintiennent fixées les parties de bord (3) de la garniture sans fin (2).

8. Agencement selon la revendication 7, dans lequel les sections de bord respectives (4) du tambour cylindrique (1) incluent un évidement (6) d'une largeur qui correspond à la largeur de la bande sans fin (5), et dans lequel les parties de bord respectives (3) de la garniture sans fin (2) ainsi que les bandes sans fin respectives (5) sont au moins partiellement rétractées dans lesdits évidements (6) afin de fixer les parties de bord (3) de la garniture sans fin (2) dans ledit évidement.

9. Agencement selon la revendication 7 ou 8, dans lequel l'épaisseur des bandes sans fin (5) est supérieure à l'épaisseur de la garniture sans fin (2).

10. Agencement selon la revendication 9, dans lequel les bandes sans fin (5) comprennent de multiples couches d'étoffe, de préférence une double couche d'étoffe.

11. Agencement selon l'une quelconque des revendications 7 à 10, dans lequel les extrémités longitudinales des bandes sans fin (5) incluent une couture préparée à l'avance pour assembler les extrémités longitudinales les unes aux autres.
